(19) **Europäisches Patentamt / European Patent Office / Office européen des brevets**

(11) **EP 2 867 717 B1**

(12) # FASCICULE DE BREVET EUROPEEN

(45) Date de publication et mention de la délivrance du brevet:
**26.04.2017 Bulletin 2017/17**

(21) Numéro de dépôt: **13737322.1**

(22) Date de dépôt: **14.06.2013**

(51) Int Cl.:
*G02B 19/00* (2006.01)　　*G02B 3/04* (2006.01)
*G02B 13/18* (2006.01)　　*G02B 27/00* (2006.01)
*F21S 8/10* (2006.01)

(86) Numéro de dépôt international:
**PCT/FR2013/051402**

(87) Numéro de publication internationale:
**WO 2014/001687 (03.01.2014 Gazette 2014/01)**

(54) **PROCÉDÉ DE DÉFINITION D'UNE LENTILLE ASPHÉRIQUE ET MODULE D'ÉCLAIRAGE POUR PROJECTEUR DE VÉHICULE AUTOMOBILE COMPORTANT UNE TELLE LENTILLE**

BESTIMMUNGSVERFAHREN EINER ASPHÄRISCHEN LINSE UND LICHTMODUL DAMIT FÜR EIN KRAFTFAHRZEUG

DEFINITION PROCESS FOR AN ASPHERICAL LENS AND LIGHTING MODULE FOR A MOTOR VEHICLE COMPRISING SUCH A LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2012 FR 1256202**

(43) Date de publication de la demande:
**06.05.2015 Bulletin 2015/19**

(73) Titulaire: **Peugeot Citroën Automobiles SA 78140 Vélizy Villacoublay (FR)**

(72) Inventeur: **GONCALVES, Whilk Marcelino F-75013 Paris (FR)**

(56) Documents cités:
**EP-A2- 0 775 927　　WO-A1-01/07958**
**US-A- 6 166 860　　US-A1- 2005 286 251**

Printed by Jouve, 75001 PARIS (FR)

EP 2 867 717 B1

**Description**

Le domaine technique de l'invention est celui de l'éclairage automobile.

L'invention se rapporte en particulier aux systèmes de projection, ou projecteurs, comprenant un module d'éclairage apte à créer les feux de croisement, feux de route, antibrouillard, etc.

Elle concerne plus particulièrement un module d'éclairage comportant une seule source lumineuse, notamment une diode électroluminescente ou LED, (acronyme anglo-saxon pour « Light-Emitting Diode ») associée à une lentille de projection asphérique et à un procédé de définition d'une telle lentille.

Dans l'art antérieur, la forme de la distribution lumineuse est définie par un réflecteur et un cache afin de créer un feu de croisement et sa ligne de coupure.

L'utilisation d'un cache pour définir la forme de la distribution lumineuse réduit la performance du projecteur, car une fraction importante du flux lumineux (~50%) est occultée.

De plus, le cache représente un composant qui doit être intégré mécaniquement au projecteur, avec une forme et des caractéristiques optiques (notamment en réflexion) bien précises.

La publication WO 01/07958 A1 décrit une lentille particulièrement illustrative.

La présente invention propose un module d'éclairage dans lequel la forme du faisceau lumineux, projeté à l'avant du véhicule, est entièrement définie par la géométrie de la lentille et la position relative de la source lumineuse et de la lentille, sans l'utilisation d'un cache ou autre élément occultant.

A cet effet, l'invention a pour premier objet un procédé de définition d'une lentille asphérique d'axe optique déterminé, conforme à l'objet de la revendication 1.

Selon une caractéristique, l'évolution de la surface d'entrée répond à une équation de la lentille asphérique qui s'exprime en fonction de la distance à l'axe optique par l'équation suivante:

$$z(r) = \frac{r^2}{R\left(1 + \sqrt{1 - (1+\kappa)\frac{r^2}{R^2}}\right)} + \alpha_1 r^2 + \alpha_2 r^4 + \alpha_3 r^6 + \cdots$$

Où :

R est le rayon de courbure de la lentille
K est la conicité ;

$\alpha_1 r^2 + \alpha_2 r^4 + \alpha_3 r^6 + \cdots$: des termes correspondant à des coefficients de correction qui sont déterminés pour ajuster la zone sensiblement plane au profil cylindrique.

L'invention a pour troisième objet un module d'éclairage apte à générer un faisceau lumineux, ledit module d'éclairage comprenant une source lumineuse et une lentille de projection, ladite lentille étant obtenue à partir du procédé tel que décrit ci-dessus.

L'invention a pour quatrième objet un projecteur de véhicule automobile, caractérisé en ce qu'il comporte au moins un module d'éclairage tel que décrit ci-dessus.

L'invention a pour quatrième objet, un procédé de formation d'un faisceau lumineux d'un feu de croisement obtenu à partir d'un projecteur tel que décrit ci-dessus, consistant à déplacer la source lumineuse suivant une direction perpendiculaire à l'axe optique et en faisant tourner la source lumineuse autour de l'axe optique de manière à obtenir une distribution du faisceau lumineux en forme d'ailes de papillon, dont une partie du contour, après rotation, définit la ligne de coupure habituelle d'un feu de croisement.

Ainsi, avantageusement, la lentille est le seul acteur de la conformation complète du faisceau lumineux, pour la création d'un feu de croisement, sans l'utilisation d'un cache ou autre moyen d'occultation.

La performance du projecteur est augmentée : le rendement énergétique (non utilisation d'un cache) est augmenté et le contrôle de la forme du faisceau est mieux maîtrisée (distribution lumineuse et homogénéité du faisceau).

La mécanique du module est simplifiée : réduction du nombre de composants par rapport un concept classique.

L'encombrement du module est réduit : absence d'un réflecteur collecteur.

D'autres buts, caractéristiques et avantages de l'invention apparaîtront au cours de la description suivante d'un de ses modes de réalisation, donné à titre d'exemple non limitatif, en regard des dessins joints.

Sur les dessins :

- la figure 1 est une vue schématique en coupe verticale axiale d'un module optique selon l'état de l'art ;
- la figure 2 est une vue frontale du module optique de la figure 1, sans la lentille, dans lequel le cache est dans une position permettant d'obtenir un faisceau lumineux de type « feu de croisement » ;

- la figure 3 illustre une lentille asphérique de type connu ;
- la figure 4 est une vue en coupe de la lentille asphérique illustrant la direction des rayons émergeant en fonction des courbures de la lentille ;
- la figure 5 illustre un procédé de définition de la surface de sortie d'une lentille asphérique à surface d'entrée plane;
- la figure 6 illustre la distribution d'un faisceau lumineux projeté sur un écran par la lentille de la figure 5 ;
- la figure 7 illustre un procédé de définition de la surface de sortie d'une lentille asphérique à surface d'entrée cylindrique (lentille asphérique toroïdale);
- la figure 8 illustre la distribution d'un faisceau lumineux projeté sur un écran par la lentille de la figure 7 ;
- la figure 9 illustre une distribution du faisceau lumineux issu de la lentille de la figure 7 pour la création d'un feu de croisement ;
- la figure 10 illustre l'effet sur le faisceau lumineux d'un élargissement vertical de la distribution à partir une lentille définie par le procédé selon l'invention ;
- la figure 11 illustre une distribution lumineuse obtenue quand on tourne le faisceau autour de l'axe optique de la lentille de la figure 10 afin d'obtenir la ligne de coupure habituelle d'un feu de croisement ;
- la figure 12 illustre une forme évolutive de la zone centrale de la surface d'entrée de la lentille définie par le procédé selon l'invention afin de créer les zones de concentration du feu de croisement ;
- la figure 13 illustre une zone de concentration lumineuse engendrée par la surface d'entrée évolutive de la lentille définie par le procédé selon l'invention ; et
- la figure 14 illustre un mode de réalisation d'un module d'éclairage selon l'invention pour projecteur de véhicule automobile.

Sur les différentes figures, les mêmes références désignent des éléments identiques ou similaires.

Pour les figures illustrant les distributions lumineuses, les zones en noir correspondent aux zones de forte concentration lumineuse.

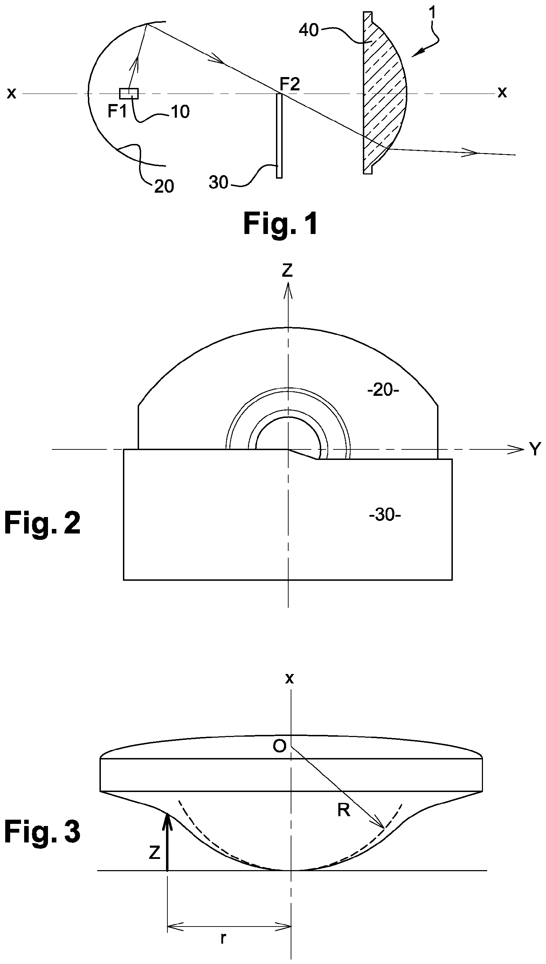

Un module d'éclairage 1 d'un projecteur de véhicule automobile de l'état de la technique est décrit ci-après en référence à la figure 1.

Il comporte un réflecteur ellipsoïdal 20, une lentille convergente 40, disposée en regard du réflecteur 20 et au moins une source lumineuse 10 produisant une pluralité de rayons lumineux, disposée dans le réflecteur 20.

Le réflecteur 20, la lentille 40 et la source lumineuse 10 sont agencés pour projeter un faisceau lumineux à l'extérieur du module 1.

La source lumineuse 10 est disposée sur le premier foyer F1 du réflecteur 20. La source lumineuse est réalisée, par exemple, à partir d'une lampe halogène, d'une lampe au xénon ou d'une ou plusieurs LEDs.

Les rayons lumineux produits par la source lumineuse 10 sont réfléchis par le réflecteur 20 et sont focalisés sur un deuxième foyer F2. La lentille convergente 40 est disposée en regard du réflecteur de manière à ce que son foyer coïncide avec le foyer F2.

Un tel agencement permet de produire un faisceau lumineux du type « feu de route ».

Pour obtenir un faisceau du type « feu de croisement ou code » à partir de cet agencement, le module optique 1 comporte en outre un cache 30 amovible qui est positionné au voisinage du foyer F2. Le cache 30 bloque environ 50% du flux lumineux (Fig. 2).

Les rayons lumineux issus du foyer F2 traversent la lentille 40, qui est calculée de telle sorte que les rayons émergent de la lentille parallèlement à l'axe optique "x" (cf. Fig. 1).

La figure 3 illustre un exemple de lentille asphérique. Elle est caractérisée par sa flèche z(r) calculée à partir de l'équation suivante :

$$z(r) = \frac{r^2}{R\left(1 + \sqrt{1 - (1+\kappa)\frac{r^2}{R^2}}\right)} + \alpha_1 r^2 + \alpha_2 r^4 + \alpha_3 r^6 + \cdots \quad (1)$$

Où :

R est le rayon de courbure de la lentille
K est la conicité ;
r est la distance de la flèche à l'axe optique

$\alpha_1 r^2 + \alpha_2 r^2 + \alpha_3 r^2 + \cdots$: une suite polynomiale en « r » où $\alpha_1$, $\alpha_2$, $\alpha_3$, ... sont des coefficients déterminés pour modifier la flèche z(r) de la lentille et donc la direction des rayons émergents.

Pour les faibles valeurs du paramètre r, proches de l'axe optique x de la lentille, la lentille peut être définie par une courbe "conique".

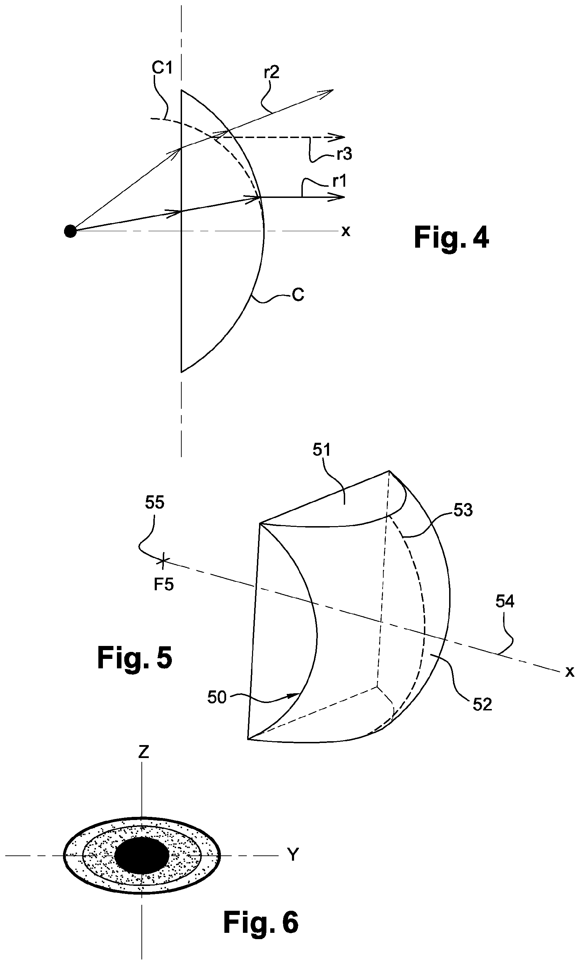

Telle qu'illustrée à la figure 4, la courbure C de la lentille est progressivement corrigée par les facteurs de correction (courbure C1 en traits pointillés)

La courbure C correspond à la fraction de l'équation (1) d'une lentille à profil conique : les rayons lumineux r1 émergent parallèlement à la direction parallèle à l'axe optique x au voisinage de l'axe optique de la lentille (en traits épais) : au voisinage de l'axe optique, les courbures C et C1 sont confondues. En s'éloignant de l'axe optique, les rayons r1 sont progressivement déviés de cette direction (rayons r2 en traits fins).

Les coefficients de correction déforment progressivement la courbure C afin que tous les rayons émergent parallèlement à la direction x (rayons r3 en trait interrompu).

La courbure de la surface de sortie des rayons, considérée à l'axe optique x, est appelée « courbe génératrice »

Par surface de sortie, on entend la surface par laquelle sortent les rayons dits émergeants et par surface d'entrée, la surface par laquelle entre le faisceau lumineux généré par la source lumineuse.

La figure 5 illustre un procédé de définition d'une surface de sortie 52 d'une lentille asphérique 50.

La surface d'entrée 51 de la lentille est plane.

La surface de sortie 52 est obtenue par la révolution de la courbe génératrice 53 autour d'un axe de révolution 54 qui correspond à l'axe optique x de la lentille.

La figure 6 illustre la distribution d'un faisceau lumineux projeté sur un plan vertical Y Z d'un référentiel X Y Z, disposé à 25m (écran) de la lentille asphérique 50 quand une source lumineuse 55 est placée au foyer F5 de la lentille 50 sur l'axe optique x qui est également l'axe de révolution 54.

Un faisceau du type "feu de route" est ainsi obtenu.

Un faisceau « feu de croisement, ou code » est obtenu lorsqu'un cache est placé au voisinage du foyer F5 de la lentille 50, comme représenté dans la figure 1.

Le faisceau est concentré à l'intersection des axes Y et Z.

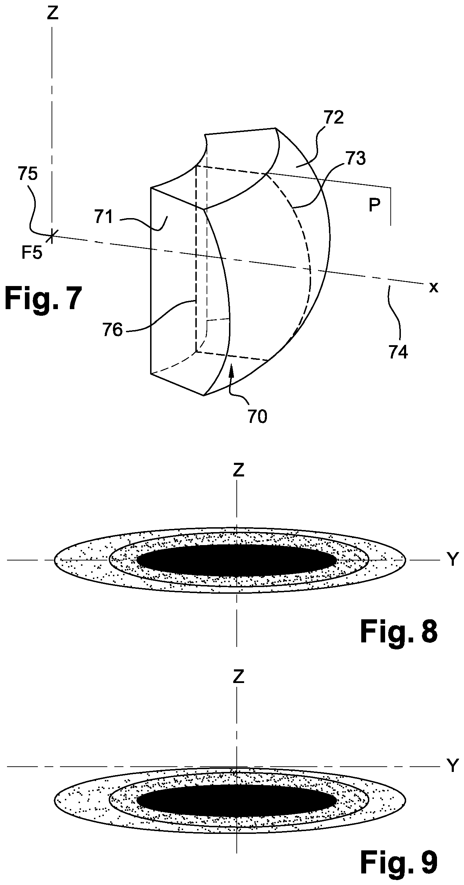

La figure 7 illustre un procédé de définition d'une lentille torique 70, obtenue par la même courbe génératrice 73 utilisée pour la définition de la lentille asphérique de la figure 5. Dans ce cas, la lentille torique 70 est obtenue par la révolution de la courbe génératrice 73 autour de l'axe de révolution 74 et par la révolution d'une droite génératrice 76 de la surface d'entrée 71, autour d'un axe vertical « z », perpendiculaire à l'axe optique x, qui passe par le foyer F5 de la lentille 70. La surface d'entrée 71 de la lentille 70 n'est plus un plan, mais un cylindre.

La figure 8 illustre la distribution d'un faisceau lumineux projeté sur un plan vertical Y Z d'un référentiel X Y Z, disposé à 25 m (écran) de la lentille asphérique 70 quand une source lumineuse 75 est placée au foyer F7 de la lentille 70 sur l'axe optique x qui est également l'axe de révolution 74.

La figure 9 illustre la distribution du faisceau lumineux issue de la lentille torique 70 quand la source lumineuse 75 est déplacée verticalement, vers le haut, le long de l'axe vertical z. Cela permet la création d'une ligne de coupure, nécessaire pour la création d'un feu de croisement.

Le faisceau lumineux, issu de la lentille torique 70, est un faisceau large et peu concentré.

Dans l'art antérieur, une zone de concentration peu large et très intense proche de l'axe est obtenue typiquement à l'aide d'un réflecteur 20 (figure 1).

D'autre part, le faisceau issu d'une lentille torique n'a pas une distribution verticale suffisante, capable d'éclairer à proche et à moyenne distance du véhicule.

Un procédé de définition d'une lentille selon l'invention est décrit ci-après.

La courbe génératrice de la surface d'entrée de la lentille selon l'invention est déterminée à partir d'une fonction évolutive.

Jusqu'à une distance déterminée "d" de son axe optique, le comportement de la lentille est celui d'une lentille asphérique classique, c'est-à-dire une lentille où les rayons sortent parallèlement à l'axe optique de la lentille (angle nul par rapport à cet axe). Au-delà de cette distance "d", les coefficients de correction de l'équation (1) sont atténués, pour que les rayons lumineux émergent de la lentille à des angles supérieurs à zéro. L'atténuation de ces paramètres est définie précisément par les polynômes d correction asphériques :

$$\alpha_1 r^2 + \alpha_2 r^4 + \alpha_3 r^6 + \cdots,$$

On accentue cette évolution pour chaque section radiale de la lentille, à partir du plan médian PM de la lentille

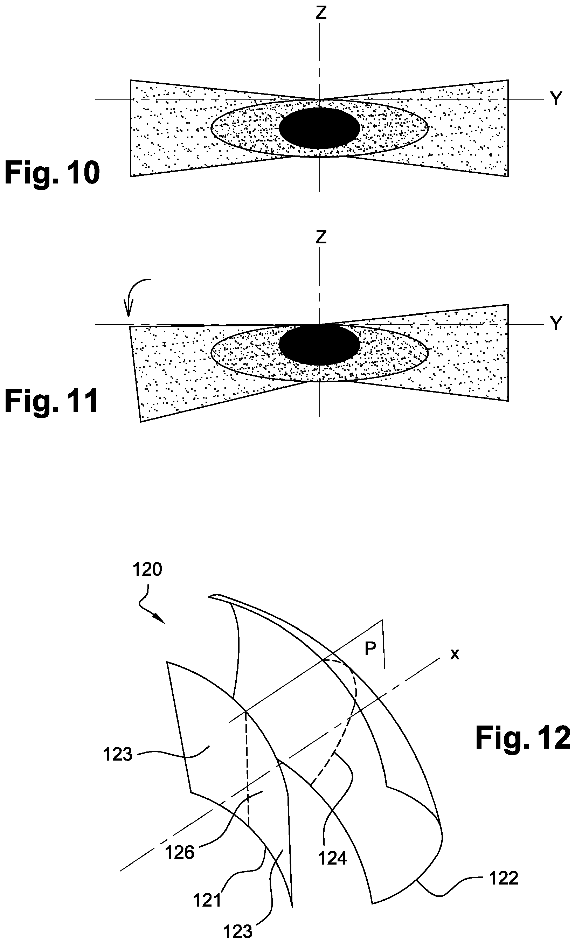

L'effet sur le faisceau lumineux est un élargissement vertical de la distribution qui crée l'effet illustré à la figure 10.

On oriente ensuite les formes périphériques, en forme d'ailes de papillon, qui une fois orientées correctement permettent un meilleur éclairement de la route à courte et moyenne distances.

La figure 11 illustre la distribution lumineuse obtenue quand on tourne le faisceau autour de l'axe optique de la lentille suivant le sens anti trigonométrique, soit une rotation vers le bas à gauche de la distribution lumineuse, afin d'obtenir la coupure habituelle d'un feu de croisement (coupure horizontale à gauche et inclinée à droite pour les pays à conduite à gauche).

Comme illustré à la figure 12, on crée une forme évolutive de la zone centrale 126 de surface d'entrée de la lentille 120 afin de créer les zones de concentration du feu de croisement.

On aplatit la surface d'entrée 121 à proximité de l'axe optique x (comportement de concentration comme dans une lentille asphérique) et on fait évoluer progressivement cette forme plane vers une forme cylindrique pour s'ajuster à la surface d'entrée 121 d'une lentille torique, c'est-à-dire, jusqu'au profil cylindrique des bords 123.

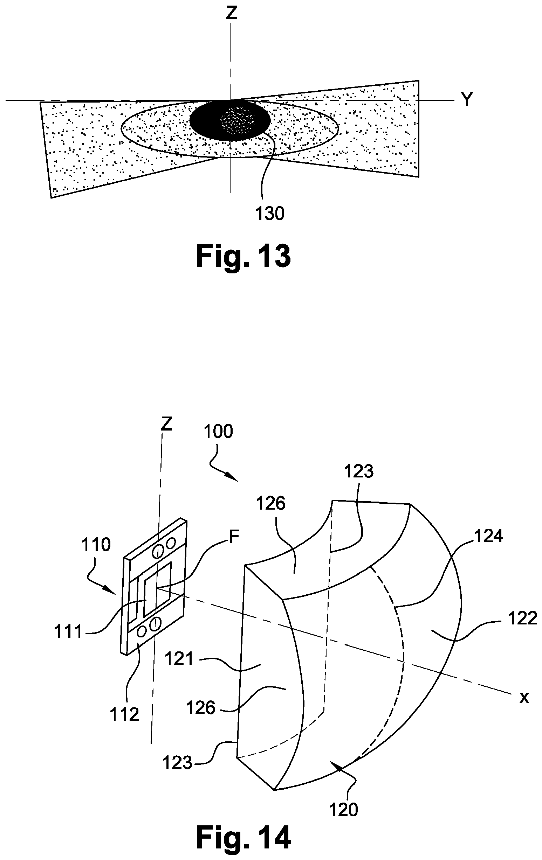

La figure 13 illustre la zone de concentration 130 engendrée par la surface d'entrée évolutive 121

Elle se superpose à la zone de concentration de la distribution de la figure 11.

La figure 14 illustre un mode de réalisation préféré d'un module d'éclairage 100 selon l'invention pour projecteur de véhicule automobile.

Le module 100 comporte une source lumineuse 110 comportant une LED de puissance 111 monté sur un circuit imprimé 112 et une lentille 120 telle que définie par le procédé de définition décrit ci-dessus. Un tel module 100 selon l'invention permet de générer un feu de croisement sans avoir besoin ni de réflecteur ellipsoïdal ni de cache amovible.

## Revendications

1. Procédé de définition d'une lentille asphérique (120) d'axe optique (x) déterminé, du type comportant une surface d'entrée (121) apte à recevoir un flux lumineux issu d'une source lumineuse (110) disposée au foyer (F) de la lentille (120) sur l'axe optique (x) et une surface de sortie (122) de laquelle émergent les rayons du flux lumineux ayant traversé la lentille (120), ladite surface de sortie (122) étant obtenue après révolution d'une courbe génératrice (124) autour de l'axe optique (x); ladite courbe génératrice (124) étant calculée pour orienter les rayons émergeant de ladite surface de sortie (122) dans une direction parallèle à l'axe optique (x), **caractérisé en ce qu'**il consiste à construire la surface d'entrée évolutive (121) à partir d'une zone sensiblement plane (126) de la surface d'entrée (121), centrée autour du plan médian (PM) de la lentille (120), puis à faire évoluer progressivement ladite zone plane (126) de la surface d'entrée (121) vers une forme cylindrique pour chaque section radiale de la lentille (120), jusqu'à obtenir un profil cylindrique en bord (123) de la lentille (120).

2. Procédé selon la revendication précédente, **caractérisé en ce que** l'évolution de la surface d'entrée (121) répond à une équation z(r) de la lentille asphérique (120) qui s'exprime en fonction de la distance r à l'axe optique x par l'équation suivante:

$$z(r) = \frac{r^2}{R\left(1 + \sqrt{1 - (1+\kappa)\frac{r^2}{R^2}}\right)} + \alpha_1 r^2 + \alpha_2 r^4 + \alpha_3 r^6 + \cdots$$

Où :

R est le rayon de courbure de la lentille
K est la conicité ;

$\alpha_1 r^2 + \alpha_2 r^4 + \alpha_3 r^6 + \cdots$; des termes correspondant à des coefficients de correction qui sont déterminés pour ajuster la zone sensiblement plane au profil cylindrique.

3. Module d'éclairage (100) apte à générer un faisceau lumineux, ledit module d'éclairage (100) comprenant une source lumineuse (110) et une lentille de projection (120), ladite lentille (120) étant obtenue à partir du procédé selon l'une des revendications précédentes.

4. Projecteur de véhicule automobile, **caractérisé en ce qu'**il comporte au moins un module d'éclairage (100) selon la revendication précédente.

5. Procédé de formation d'un faisceau lumineux d'un feu de croisement obtenu à partir d'un projecteur selon la revendication précédente, consistant à déplacer la source lumineuse (110) suivant une direction (z) perpendiculaire à l'axe optique (x) et en faisant tourner la source lumineuse (110) autour de l'axe optique (x) de manière à obtenir une distribution du faisceau lumineux en forme d'ailes de papillon, dont une partie du contour, après rotation, définit la ligne de coupure habituelle d'un feu de croisement.

**Patentansprüche**

**1.** Verfahren zur Bestimmung einer asphärischen Linse (120) mit festgelegter optischer Achse (x), eines Typs, der eine Eintrittsfläche (121) umfasst, die geeignet ist, einen von einer Lichtquelle (110) ausgehenden Lichtstrom aufzunehmen, die im Brennpunkt (F) der Linse (120) auf der optischen Achse (x) positioniert ist, und einer Austrittsfläche (122), aus der die Strahlen des Lichtstroms austreten, die die Linse (120) durchquert haben, wobei die besagte Austrittsfläche (122) nach Drehung einer formgebenden Kurve (124) um die optische Achse (x) erhalten wird; wobei besagte formgebende Kurve (124) so berechnet ist, dass sie die aus der besagten Austrittsfläche (122) austretenden Strahlen in eine Richtung parallel zur optischen Achse (x) ausrichtet, die **dadurch gekennzeichnet ist, dass** sie von einem deutlich planen Bereich (126) der Eintrittsfläche (121) ausgehend die evolutive Eintrittsfläche (121) herstellt, die rund um die Medianebene (PM) der Linse (120) zentriert ist, und dann den besagten planen Bereich (126) der Eintrittsfläche (121) sich für jeden Radialquerschnitt der Linse (120) zu einer zunehmend zylindrischen Form entwickeln lässt, bis man am Rand (123) der Linse (120) ein zylindrisches Profil erhält.

**2.** Verfahren gemäß dem vorigen Anspruch, **dadurch gekennzeichnet, dass** die Entwicklung der Eintrittsfläche (121) einer Gleichung z(r) der asphärischen Linse (120) folgt, die sich in Abhängigkeit von der Entfernung r zur optischen Achse x mit der folgenden Gleichung ausdrücken lässt:

$$z(r) = \frac{r^2}{R\left(1 + \sqrt{1 - (1 + \kappa)\frac{r^2}{R^2}}\right)} + \alpha_1 r^2 + \alpha_2 r^4 + \alpha_3 r^6 + \cdots$$

wobei: R der Krümmungsradius der Linse ist
K die Konizität ist;
$\alpha_1 r^2 + + \alpha_1 r^4 + + \alpha_3 r^6$ + ... Terme sind, die Korrekturkoeffizienten entsprechen, die festgelegt werden, um die deutlich plane Fläche an das zylindrische Profil anzupassen.

**3.** Beleuchtungsmodul (100), das geeignet ist, ein Lichtbündel zu erzeugen, wobei besagtes Beleuchtungsmodul (100) eine Lichtquelle (110) und eine Projektionslinse (120) umfasst, wobei man die besagte Linse (120) mittels eines Verfahrens eines der vorigen Ansprüche gemäß erhält.

**4.** Kraftfahrzeugscheinwerfer, **dadurch gekennzeichnet, dass** er mindestens ein dem vorigen Anspruch gemäßes Beleuchtungsmodul (100) enthält.

**5.** Verfahren zur Erzeugung eines mittels eines Scheinwerfers gemäß dem vorigen Anspruch erhaltenen Abblendlicht-Lichtbündels, das darin besteht, die Lichtquelle (110) in eine Richtung (z) rechtwinklig zur optischen Achse (x) zu bewegen und die Lichtquelle (110) sich um die optische Achse drehen zu lassen, sodass man eine Lichtverteilung in Form von Schmetterlingsflügeln erhält, wovon ein Teil der Kontur nach Drehung die übliche Hell-Dunkel-Grenze eines Abblendlichts bestimmt.

**Claims**

**1.** Method for defining an aspherical lens (120) with a given optical axis (x), of the type comprising an entry surface (121) able to receive a light flow issuing from a light source (110) disposed at the focus (F) of the lens (120) on the optical axis (x) and an exit surface (122) from which the rays of the light flow that have passed through the lens (120) emerge, said exit surface (122) bring obtained after revolution of a generatrix curve (124) about an optical axis (x); said generatrix curve (124) being calculated so as to orient the rays emerging from said exit surface (122) in a direction parallel to the optical axis (x), **characterised in that** it consists of constructing the evolutive entry surface (121) from a substantially planar zone (126) of the entry surface (121), centred around the midplane (PM) of the lens (120), and then progressively causing said planar zone (126) of the entry surface (121) to evolve towards a cylindrical form for each radial section of the lens (120), until a cylindrical profile is obtained at the edge (123) of the lens (120).

**2.** Method according to the preceding claim, **characterised in that** the evolution of the entry surface (121) complies with an equation z(r) of the aspherical lens (120) that is expressed as a function of the distance r to the optical axis x by the following equation:

$$z(r) = \frac{r^2}{R\left(1 + \sqrt{1 - (1+\kappa)\frac{r^2}{R^2}}\right)} + \alpha_1 r^2 + \alpha_2 r^4 + \alpha_3 r^6 + \cdots$$

where: R is the radius of curvature of the lens
K is the conicity;
$\alpha_1 r^2 + \alpha_2 r^4 + \alpha_3 r^6 + ...$ terms corresponding to correction coefficients that are determined so as to adjust the substantially planar zone to the cylindrical profile.

3. Lighting module (100) able to generate a light beam, said lighting module (100) comprising a light source (110) and a projection lens (120), said lens (120) being obtained from the method according to one of the preceding claims.

4. Motor vehicle headlight, **characterised in that** it comprises at least one lighting module (100) according to the preceding claim.

5. Method for forming a light beam of a dipped headlight obtained from a headlight according to the preceding claim, consisting of moving the light source (110) in a direction (z) perpendicular to the optical axis (x) and turning the light source (110) about the optical axis (x) so as to obtain a distribution of the light beam in the form of butterfly wings, a part of the contour of which, after rotation, defines the normal cutoff line of a dipped headlight.

## Fig. 1

## Fig. 2

## Fig. 3

**Fig. 4**

**Fig. 5**

**Fig. 6**

**Fig. 7**

**Fig. 8**

**Fig. 9**

**Fig. 10**

**Fig. 11**

**Fig. 12**

Z

Y

130

**Fig. 13**

Z    100

123

126

124

110    F

111

112    121

126    122

123    x

120

**Fig. 14**

**EP 2 867 717 B1**

**RÉFÉRENCES CITÉES DANS LA DESCRIPTION**

**Documents brevets cités dans la description**

- WO 0107958 A1